# EUROPEAN PATENT APPLICATION

(11) **EP 3 324 378 A1**
(43) Date of publication of application: **23.05.2018**
(21) Application number: 17201996.0
(22) Date of filing: 16.11.2017
(51) Int. Cl.: G08B 21/06, G06K 9/00

(54) **ELECTRONIC SAFETY SYSTEM AND METHOD FOR DETECTING A VEHICLE DRIVER'S ATTENTION**

(30) Priority: 16.11.2016 IT 201600115481
(71) Applicant: Ambrosetti, Sergio Aido, 21013 Gallarate, VA (IT)
(72) Inventor: AMBROSETTI, Sergio Aldo, 21013 Gallarate VA (IT); LIVIERO, Filippo Maria, 21013 Gallarate VA (IT)
(74) Representative: Penza, Giancarlo

(57) **Abstract**

An electronic safety system (1) for detecting the attention of the driver of a vehicle is described. The system comprises at least one video camera (2) and a processing unit (3). The at least one video camera is positioned within the passenger compartment of the vehicle and is configured to frame (6) at least one portion of the steering wheel (7) of the vehicle and to frame the movements of at least one hand of the driver of the vehicle, said at least one video camera (2) being configured to acquire a representative image of the portion of the steering wheel (7) of the vehicle and the at least one hand of the driver. The processing unit (3) is configured to receive said image acquired from said at least one video camera (2). The processing unit (3) is further configured to process the image received and to recognise, according to the image processed, the use of a portable electronic device (8) by the at least one hand (9) of the driver.

## Description

### FIELD OF APPLICATION

The present invention relates to an electronic safety system and method for detecting the attention of the driver of a vehicle.

In particular, the present invention relates to an electronic safety system and method for detecting the attention of the driver of a vehicle able to identify the possible use of a portable electronic device.

### PRIOR ART

As is known, over recent years, many systems have been developed for improving both the active and passive safety of vehicles, particularly motor vehicles, which can prevent and/or reduce the number of road accidents.

It is also known that statistics on road accidents indicate that over recent years one of the main causes of accidents is due to distraction of the driver of the vehicle due to the use of portable electronic devices while driving the vehicle itself, such as smartphones.

In fact, excessive confidence in one's own abilities and the conviction of having good reflexes lead drivers of vehicles to answer calls, read messages received on their portable electronic device, take photographs, chat and surf the internet while driving.

With a car running, the two seconds required to read a massage received on a portable electronic device are equivalent to about thirty metres travelled by the vehicle without looking at the road, with the risk of colliding with another vehicle or running over a pedestrian.

Systems are known that, through a video camera, film the outside of the vehicle and try to prevent the vehicle running over any pedestrians.

Other known systems, through the detection of the eye movement and/or driving style, can determine the level of tiredness of the driver.

Systems are also known that aim to temporarily block the use of the driver's portable electronic device while driving the vehicle; such systems require the active collaboration of the driver, who must switch off or temporarily deactivate their portable electronic device.

Therefore, a need is perceived for reducing or preventing road accidents caused by distraction of the driver of the vehicle due to the improper use of a portable electronic device while driving.

### SUMMARY OF THE INVENTION

An object of the present invention is to provide an electronic safety system and the relative method for detecting the attention of the driver of a vehicle which allows the distraction of the driver to be detected, in particular caused by improper use of portable electronic devices; in this way, road accidents due to the use of such electronic devices while driving are reduced.

Another object of the present invention is to provide an electronic safety system and the relative method for detecting the attention of the driver of a vehicle that is simple and efficient.

A further object of the present invention is to provide an electronic safety system and the relative method for detecting the attention of the driver of a vehicle that is easy to install inside the vehicle.

A further object of the invention is to realise an electronic safety system and the relative method for detecting the attention of the driver of a vehicle that requires reduced maintenance interventions and that offers maximum safety and reliability guarantees during use.

These and other aims are achieved by the invention as described in the appended claims.

The invention relates to an electronic safety system for detecting the attention of the driver of a vehicle and the relative method, according to claims 1 to 10.

Further characteristics and advantages of the invention will more fully emerge from the description of a preferred but not exclusive embodiment of an electronic safety system and the relative method for detecting the attention of the driver of a vehicle according to the invention, illustrated by way of indicative and non-limiting example in the accompanying drawings.

### BRIEF DESCRIPTION OF THE FIGURES

The description is provided below with reference to the accompanying figures, whose purpose is likewise purely illustrative and hence non-limiting, in which:
- figure 1 illustrates a portion of the passenger compartment of a vehicle equipped with an electronic safety system according to the invention;
- figure 2 illustrates a block diagram of the electronic safety system according to the invention.
- figure 3 illustrates in more detail a component of the system of figure 2.

### DETAILED DESCRIPTION

With reference to the mentioned figures, the electronic safety system for detecting the attention of the driver of a vehicle according to the invention is indicated overall with reference number 1.

The electronic safety system 1 comprises a video camera 2 and a processing unit 3.

The video camera 2 is configured to frame at least one portion of the steering wheel 7 of the vehicle and to capture the hand and/or arm movements of the driver of the vehicle.

The field of view 6 framed by the video camera 2 is a measure of the amplitude of the field of view that the video camera 2 is able to frame.

Preferably, the focal length of the objective of the video camera 2 can be varied so as to condition the frameable field of view 6, so that a larger or smaller field of view can be framed.

Preferably, the video camera is configured to acquire depth or 3D images.

Preferably, the system 1 further comprises one or more light sources, possibly associable with the video camera, adapted to radiate light towards the zone of the driver's hands and/or arms so as to allow the video camera 2 to acquire one or more images of the driver.

The first and second light source may be of different types.

For example, one or more of the light sources may include a source of infra-red (IR) light.

Alternatively, the first and second light source may have different wavelengths.

Preferably, the video camera 2 is digital and comprises inside it, for example, a CMOS sensor or a CCD sensor for converting the level of light into digital data. Preferably, the video camera 2 is of the depth recognition type, able to generate a depth map at a short distance from what is seen through the video camera, or a video camera for stereo vision which, through the use of two video cameras whose reciprocal relationships are known, is able to approximate a 3D representation of what is framed by the two video cameras.

Alternatively, the video camera 2 is a normal video camera (or a webcam) for the recognition of gestures based on image processing.

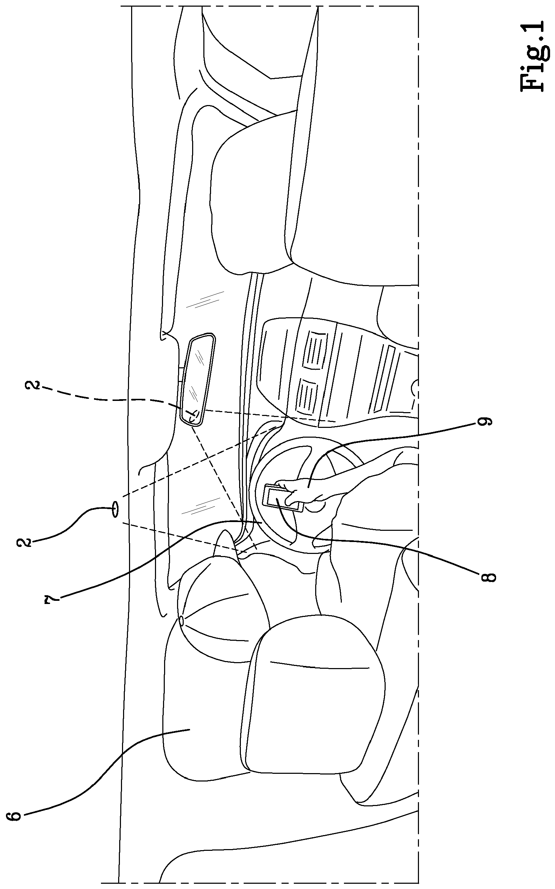

The video camera 2 is positioned inside the passenger compartment of the vehicle, preferably in the zone of the rear-view mirror or, alternatively, of the overhead light of the passenger compartment, as shown schematically in figure 1.

The image acquired by the video camera 2 of the steering wheel 7 of the vehicle and of the driver's hands is transmitted, by means of an acquisition signal S_dt, to the processing unit 3, which is configured to process the image received by the video camera 2.

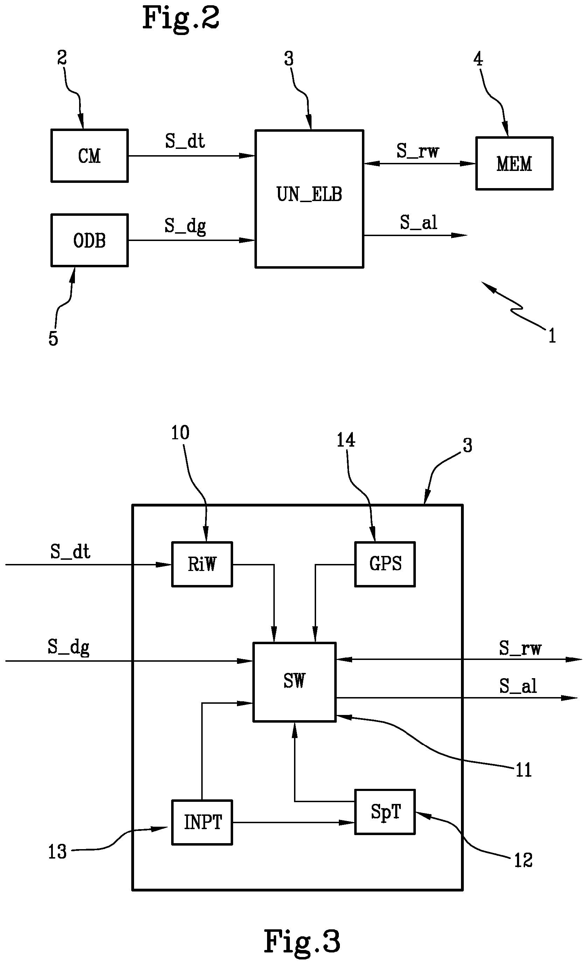

With reference to figure 3, the processing unit 3 comprises a receiving module 10 and an operating module 11.

Such transmission of the image acquired can take place via cable or, alternatively, it may be wireless through the receiving module 10 contained inside the processing unit 3.

The digitalised image is acquired by the operating module 11 able to process it and to extract different information from it.

For example, the operating module 11 is able to obtain the information that at least one hand 9 of the driver has become detached from the steering wheel. Said processing takes place in real time.

Preferably, more information obtainable from the operating module 11 relates to at least one hand 9 detached from the steering wheel 7 with a portable electronic device 8 held by the hand 9.

Even more preferably, the operating module 11 is able to detect whether the driver is talking with the portable electronic device 8 held by a hand 9 and taken to the ear zone or whether the driver is typing on said portable electronic device 8 using the fingers of the hand 9 that is holding it or with those of the other hand.

The operating module 11 contains inside it one or more mathematical computer vision algorithms for recognising the images, preferably digitally.

In particular, the operating module 11 is able to detect one or more gestures of one or both hands and to identify some objects of the image such as, for example, the steering wheel and any portable electronic device 8.

For example, the operating module 11 is able to recognise gestures or movements of the driver ("gesture recognition") based, for example, on a comparison of two depth or 3D images and is able to recognise one or more parts of the human body framed by the video camera 2 such as, by way of non-limiting example, the face, head, hands, fingers or arms.

Preferably, the system 1 further comprises a memory 4 in which a table is stored containing a list of movements or gestures of a specific driver. Preferably, the list of movements of a specific driver can be stored during a system learning step, to be performed during the system calibration and tuning step 1.

In the situation in which the operating module 11 has indicated that at least one hand 9 has become detached from the steering wheel 7 for more than a predetermined period of time, or that the driver is using the portable electronic device 8 for talking on the phone while driving or for texting while driving or for taking a picture while driving, the processing unit 3 emits an alarm signal S_al. More particularly, the alarm signal S_al emitted by said processing unit 3 comprises one or more actions such as, for example, making the steering wheel 7 vibrate, emitting a sound signal by the vehicle's audio system, emitting a visual signal on the video system and/or on the vehicle's dashboard instruments, or making the vehicle slow down.

Preferably, the processing unit 3 may comprise a unit able to detect that the vehicle is moving.

For example, the processing unit 3 further comprises a positioning system 14 (e.g. a global positioning system - GPS) able to detect the movement speed of the vehicle.

Preferably, the processing unit 3 further comprises a third operating module 12 containing one or more system parameters related, for example, to a speed limit beyond which said alarm signal S_al is to be generated in the event that in the image acquired by the video camera one of the aforementioned danger situations occurs or related to the time period beyond which driving with at least one hand detached from the steering wheel 7 is dangerous.

Preferably, said system parameters 1 can be set through a configuration module 13.

Alternatively, the speed of the vehicle may be acquired by connecting said processing unit 3 to a diagnostic system 5 on-board the vehicle; in that case, the diagnostic on-board system 5 sends a status signal S_dg containing various information about the status of the vehicle, including that related to the speed. Preferably, the images filmed by the video camera 2 may be sent through a reading/writing signal S_rw and stored inside the memory 4.

Preferably, the storage of the images takes place through a continuous cycle, so that when the memory 4 is full, the old images are overwritten by those just acquired.

Optionally, in the event of an accident, the memory enters into a new image writing protection mode, so as to preserve the images filmed just before and during the accident.

The memory 4 can be either internal or external to the processing unit 3.

In the event of an accident, the images detected by the video camera 2 and stored inside the memory 4 can provide documentary evidence on the dynamics of the accident, in particular, if at the time of an accident the driver had both hands on the steering wheel 7, or if he/she was distracted by the use of the portable electronic device 8.

Advantageously, the video camera 2 is used to perform video calls through the portable electronic device 8 or another device present on board the vehicle; in this way, it is possible to make a video call without removing the hands from the steering wheel 7 while driving the vehicle.

The portable electronic device 8 may be a tablet, or a smartphone or a notebook.

The operation of the device described above, in performing the method according to the invention, is as follows.

First of all, a video camera 2 is installed inside the passenger compartment of the vehicle, so as to be able to frame, with its field of view 6, at least one portion of the steering wheel 7 of the vehicle and the movements of the hands of the driver of the vehicle; in this way, the video camera 2 is able to acquire the image of at least one portion of the steering wheel 7 of the vehicle and of the movements of the hands of the driver of the vehicle.

The image acquired is then sent to the processing unit 3, preferably positioned inside the vehicle.

The processing unit 3 processes the image received from the video camera 2 and recognises, according to the image received, the use of a portable electronic device 8 by at least one hand 9 of the driver of the vehicle.

It has in practice been noted how the method according to the invention fully achieves the prefixed task since it allows movements or gestures indicating distraction by the driver while driving the vehicle to be recognised simply and economically.

A further advantage of the system and the method according to the invention is that it can be performed without requiring complex installations or lengthy installation times.

Another advantage of the system and method according to the invention is that of being reliable to use.

It is to be noted that the system and method according to the invention radically change the concept of safety while driving a vehicle, particularly a motor vehicle, as they can detect one of the main causes of road accidents.

The system and the method for performing it, as conceived herein, are susceptible to many modifications and variations, all falling within the scope of the concept of the invention; furthermore, all the details may be replaced by technically equivalent elements.

The subject matter of the present invention is also a vehicle, particularly a motor vehicle, comprising the electronic safety system for detecting the attention of the driver of a vehicle, as defined in appended claim 1 and by one or more of the preferred embodiments thereof disclosed in the dependent claims 2 to 7.

The motor vehicle may be a car, a bus or a truck.

## Claims

1. An electronic safety system (1) for detecting the attention of the driver of a vehicle, the system comprising:
- at least one video camera (2) positioned within the passenger compartment of the vehicle and configured to frame (6) at least a portion of the steering wheel (7) of the vehicle and to frame the movements of at least one hand of the driver of the vehicle, said at least one video camera (2) being configured to acquire a representative image of the portion of the steering wheel of the vehicle and the at least one hand of the driver;
- a processing unit (3) configured to receive said image acquired from said at least one video camera (2);
wherein said processing unit (3) is further configured to process the image received and to recognise, according to the image processed, the use of a portable electronic device (8) by the at least one hand (9) of the driver.

2. The system according to claim 1, wherein the processing unit is further configured to recognise the typing of data into the portable electronic device by means of a hand of the driver.

3. The system according to claim 1 or 2, wherein the processing unit is further configured to recognise a call in progress of the portable electronic device held by a hand of the driver.

4. The system according to any one of the preceding claims, wherein said processing unit (3) is further configured to transmit an alarm signal (S_al) in the event that it has detected the use of said portable electronic device (8), wherein said alarm signal (S_al) comprises one or more of the following actions:
- making the steering wheel vibrate (7),
- emitting a sound signal from the vehicle's audio system,
- emitting a visual signal from the vehicle's video system,
- making the vehicle slow down.

5. The system according to any one of the preceding claims, wherein said video camera (8) is positioned in the zone of the rear-view mirror or of the overhead light of the passenger compartment of said vehicle and wherein the processing unit is positioned inside the vehicle.

6. The system according to any one of the preceding claims, wherein said video camera (2) is further configured to perform video calls through said portable electronic device (8).

7. The system according to any one of the preceding claims, further comprising a memory (4) configured to store the images acquired by said video camera (2).

8. The system according to any one of the preceding claims, wherein said portable electronic device (8) is a tablet or a smartphone or a notebook.

9. A safety method for detecting the attention of the driver of a vehicle, comprising the steps of:
- positioning at least one video camera (2) inside the passenger compartment of the vehicle;
- framing (6) at least a portion of the steering wheel (7) of the vehicle and the movements of at least one hand of the driver of the vehicle, by means of the at least one video camera;
- acquiring the image of the steering wheel (7) of the vehicle and of the at least one hand of the driver, by means of said at least one video camera (2);
- transmitting (S_dt) said acquired image to a processing unit (3);
- processing, by means of said processing unit (3) the image received and recognising, according to the image processed, the use of a portable electronic device (8) by the at least one hand (9) of the driver.

10. The method according to claim 9, further comprising the step of generating an alarm signal (S_al) in the event that the use of said portable device (9) is detected.
